# EUROPEAN PATENT SPECIFICATION

(11) **EP 3 303 089 B1**
(45) Date of publication and mention of the grant of the patent: **13.09.2023**
(21) Application number: 16725155.2
(22) Date of filing: 27.05.2016
(51) Int. Cl.: B60W 50/16, B60W 50/00, B60K 26/02

(54) **COAST ASSIST CONTROLLER WITH HAPTIC FEEDBACK**
LEERLAUFUNTERSTÜTZUNGSSTEUERGERÄT MIT HAPTISCHER RÜCKMELDUNG
DISPOSITIF DE COMMANDE D'ASSISTANCE EN ROUE LIBRE À RETOUR HAPTIQUE

(30) Priority: 01.06.2015 GB 201509430; 01.06.2015 GB 201509428
(43) Date of publication of application: 11.04.2018
(73) Proprietor: Jaguar Land Rover Limited, Coventry, Warwickshire CV3 4LF (GB)
(72) Inventor: KREHL, Claudia, Coventry Warwickshire CV3 4LF (GB); HASEDZIC, Elvir, Coventry Warwickshire CV3 4LF (GB); SINGH, Harpreet, Coventry Warwickshire CV3 4LF (GB); THOMAS, Philip, Coventry Warwickshire CV3 4LF (GB); PETER, Shinu, Coventry Warwickshire CV3 4LF (GB)
(74) Representative: Jaguar Land Rover Patents Department
(86) International application number: PCT/EP2016/062005
(87) International publication number: WO 2016/193145

(56) References cited:
- EP-A1- 1 777 094
- EP-A2- 1 028 387
- DE-A1-102012 025 036
- US-A1- 2012 245 817

## Description

### TECHNICAL FIELD

The present invention relates to a controller for a vehicle and more particularly, but not exclusively, to a controller for providing feedback to a driver of the vehicle. Aspects of the invention relate to a controller, a speed control system, a vehicle, and a method of providing feedback to a driver of the vehicle.

### BACKGROUND

A vehicle, such as a car, includes a drive system for driving the vehicle. The drive system includes an accelerator pedal linked, either mechanically or as part of a drive-by-wire system, to an engine. The position of the accelerator pedal configures the engine to output an engine torque, which engine torque is transferred along a drive train to a set of wheels for moving the car.

Typically however, drivers will not drive in a fuel efficient manner. For instance, when a need for a reduction in speed exists, such as entering a new reduced speed limit, a driver will often wait until a time where brakes of the vehicle must be applied in order to decelerate the vehicle quickly enough, as opposed to decelerating in a fuel efficient manner using engine braking. This is often due to habits of the driver but may also relate to a driver having a lack of knowledge of the surrounding area and being unaware of, for instance, speed limit changes up ahead.

German patent publication No. 10 2012 025 036 A1 (Schulzki et al.) and U.S. patent publication No. 2012/0245817 A1 (COOPRIDER et al.) disclose speed monitoring systems that determine speed limit thresholds and compare a vehicle's current speed to the speed limit thresholds. The speed limit thresholds may, for example, be determined based on GPS data that identifies a roundabout or a corner in the path of the vehicle. When the current speed exceeds the speed limit threshold, the system provides a warning to the driver to prompt corrective action. For example, the prompt may indicate to the driver that they should start/stop decelerating or braking because of the speed limit threshold.

Oftentimes, cars include a speed control system, or otherwise called a cruise control system. A typical speed control system monitors a current speed of the car and allows a user to manually input a desired target speed. The target speed can be input using pushbuttons on the steering wheel or using a dashboard mounted electronic human interface. Typical speed control systems work by configuring the engine and/or a braking system of the vehicle to maintain a speed equal to the target speed. Once the target speed has been set, the driver may remove their foot from the accelerator pedal since the position of the accelerator pedal is no longer required to control the engine.

However, such speed control systems are not ideal since a foot well in a car is often not ideally shaped to provide alternative foot positions to the pedals. Accordingly, foot slips resulting in the accelerator pedal being accidentally pressed often occur which may inadvertently increase the car speed past the target speed and/or waste fuel by temporarily over-revving the engine. It is an aim of the present invention to address disadvantages associated with the prior art.

### SUMMARY OF THE INVENTION

Aspects and embodiments of the invention provide a controller, a speed control system, a vehicle and a method of providing driver feedback as claimed in the appended claims.

According to an aspect of the present invention there is provided a controller for a vehicle. The controller comprises an input for receiving a sensed current vehicle speed, and a future speed limit. The controller comprises a control module arranged to generate a haptic feedback signal based on the current speed being greater than the future speed limit. The haptic feedback signal comprises a pulsed pattern and the pulsed pattern is set at a pulse frequency or magnitude depending on a retardation rate. The controller comprises an output for outputting the haptic feedback signal to a mechanism for providing haptic feedback to a driver of the vehicle.

By future speed limit, we mean a speed limit associated with, for instance, an expected route that the vehicle will traverse at a future point in time. Providing feedback to the driver that there will be a speed reduction required in future will prompt the driver to release the accelerator pedal and rely on engine braking to at least partly decelerate the vehicle using engine braking as opposed to a late deceleration solely using the (friction) brakes. A driver is more likely to be responsive to haptic feedback than other forms, such as a visual feedback where the driver may be concentrating elsewhere such as the oncoming road. Fuel economies, reduced CO₂ emissions and reduced wear and tear on mechanical components therefore result from using this controller.

By retardation rate we mean the rate of deceleration of the vehicle. Basing the frequency or magnitude of the haptic feedback signal depending on the retardation rate allows for the driver to feel a degree of urgency associated with the rate of deceleration required to achieve the future speed limit.

In an embodiment, the future speed limit is associated with distance relative to the vehicle and wherein the control module is arranged to generate the haptic feedback signal based on a distance of the vehicle to a position of the future speed limit exceeding an engine braking distance.

In the interests of clarity, the term engine braking is used herein to describe the process of decelerating the vehicle, for instance by means of cylinder compression in a vehicle having a conventional internal combustion (i.c.) engine or by regenerative means (conventionally known as regenerative braking) in an electric or hybrid-electric vehicle propelled at least in part by an electric machine. By taking into account the potential engine braking distance, the feedback can be provided solely using engine braking for further fuel economies.

In an embodiment, the mechanism is coupled to an accelerator pedal for applying the haptic feedback thereto. Outputting the feedback to the same place which the driver is using as an input, namely the accelerator pedal, the driver is much more likely to feel the feedback and in addition take note of the feedback. For the avoidance of doubt, the term "accelerator pedal" as used herein, including in the claims, is not intended to be limiting and may be interpreted to include other devices which are commonly used to request acceleration of the vehicle including, but not limited to, a handlebar-type accelerator control or a throttle lever-type accelerator control.

The retardation rate is based on a distance to the future speed limit together with a degree of engine braking available according to a current configuration of a gear box of the vehicle.

According to a further aspect of the present invention there is provided a speed control system for a vehicle, the system comprising; an accelerator pedal; a speed sensor; a future speed limit detector; and the aforementioned controller.

In an embodiment, the future speed limit detector is an automatic speed limit detector. Autonomy in detecting the future speed limit relieves burden from the driver who is otherwise engaged driving the vehicle and who may not have knowledge of future speed limits.

In an embodiment, the automatic speed limit detector comprises a traffic sign detection system (otherwise known as a Traffic Sign Recognition or TSR system) having a camera for observing a traffic sign, and the detection system is arranged to determine the future speed limit based on information from the observed traffic sign. Using traffic signs is a reliable way to determine future speed limits due to their frequency and visibility to road users and TSR systems.

In an embodiment, the camera is stereoscopic to detect a distance of the traffic sign from the vehicle. Knowledge of the distance to the future speed limit will allow the controller to determine the amount of available engine braking which can be used to time the feedback signal to further increase fuel economies.

In an embodiment, the future speed limit detector comprises a navigation system, said navigation system comprising a means for determining a current position of the vehicle and a means for determining a plurality of speed limits located relative to the current position of the vehicle. Navigation systems are mature technologies and so would provide a high degree of accuracy for determining the future speed limit, as well as the location.

In an embodiment, the future speed limit detector comprises an environment monitoring system comprising a three dimensional mapping tool for mapping a three dimensional environment surrounding the vehicle, and the environment monitoring system is arranged to recognise an object in the mapped environment and associate a future speed limit with the recognised object. Objects such as road gradient, turns in the road ahead, obstacles requiring the vehicle to be navigated around, plus numerous other objects could impose speed limits on the vehicle since tackling the object too quickly may result in an uncontrollable manoeuver.

Data relating to the three dimensional environment surrounding the vehicle, in particular road gradients, road conditions and / or different types of terrain, will allow the controller to determine the amount of available engine braking which can be used to time the feedback signal to further increase fuel economies. For example, engine braking may be engaged earlier if the environment monitoring system indicates a downhill gradient ahead of the vehicle (even if it cannot be seen by the driver due to intervening bends in the road or obstacles in the environment).

In a further aspect of the present invention, there is provided a vehicle comprising the aforementioned speed control system.

In a further aspect of the present invention, there is provided a method of providing feedback to a driver of a vehicle, the method comprising;
receiving a sensed current vehicle speed, and a future speed limit; generating a haptic feedback signal based on the current speed being greater than the future speed limit, wherein the haptic feedback signal comprises a pulsed pattern and the pulsed pattern is set at a pulse frequency or magnitude depending on a retardation rate; and
providing haptic feedback to a driver of the vehicle based on the haptic feedback signal. The retardation rate is based on a distance to the future speed limit together with a degree of engine braking available according to a current configuration of a gear box of the vehicle.

There is also provided an example of a controller for a vehicle. The controller may comprise an input for receiving a target speed demand, from a target speed input, and a current speed, sensed from a speed sensor. The controller may comprise a control module arranged to generate a resistance force in response to the current speed exceeding the target speed. The controller may comprise an output arranged to output a resistance command to a mechanism for applying the resistance force to an accelerator pedal. This controller is not part of the claimed invention.

Without limitation, the current speed may be a current vehicle speed.

For the avoidance of doubt, the term "accelerator pedal" as used herein, including in the claims, is not intended to be limiting and may be interpreted to include other devices which are commonly used to request acceleration of the vehicle including, but not limited to, a handlebar-type accelerator control or a throttle lever-type accelerator control. Applying resistance to the accelerator pedal acts as a measure of haptic feedback. This feedback advises the driver that no further acceleration is required. The resistance applied to the accelerator pedal also minimizes the risk that a driver will slip and inadvertently press the accelerator pedal. In turn, there is a reduced risk of over revving the engine and wasting fuel. In an example, the resistance force is sufficient for the accelerator pedal to act as a footrest. In this way, the driver need not remove their foot from the pedal when the target speed has been reached. This is more comfortable for the driver and allows a greater degree of flexibility in the layout of the foot well. In addition, if the driver needs to depress the accelerator pedal subsequently, there is no need to reposition the foot. In this way, the response time of the driver to input further acceleration is reduced.

In an example, the resistance force is applied at a pedal position associated with the target speed. In this way, the driver has a degree of additional feedback as to the target speed due to previous knowledge of accelerator positions associated with various speeds.

In an example, the controller is arranged to reduce the resistance force in response to the accelerator pedal being depressed past a position associated with the target speed. Allowing the resistance force to be overcome by the driver and reducing the resistance force in such an event allows the driver to manually input an accelerator demand should there be need for doing so.

The controller may be arranged to maintain the target speed when the accelerator pedal is depressed past the position associated with the target speed. This has the advantage of allowing the driver to manually input an accelerator demand without affecting the target speed.

The controller may be arranged to return the accelerator pedal to the position associated with the target speed following removal of force applied to the accelerator pedal to depress the accelerator pedal past a position associated with the target speed. This has the advantage of maintaining feedback to the driver regarding the target speed due to the driver's previous knowledge of accelerator positions associated with various speeds.

In an example there is provided a vehicle speed control system comprising; an accelerator pedal, a target speed input, a speed sensor, and the aforementioned controller.

Without limitation the speed sensor may comprise a vehicle speed sensor such as a tachometer arranged to determine the speed of the vehicle from the rotational speed of the vehicle wheels.

In an example, the vehicle speed control system comprises an activator for activating and/or deactivating the controller. In this way, the driver can have more control over the implementation of the system and select when the system should or shouldn't be used.

In an example, the target speed input is a manual target speed input for a driver to manually input the target speed.

In an example, the target speed input is an automatic target speed input for automatically detecting the target speed. In this way, the system will work independently of the driver having any knowledge of upcoming speed limits.

In an example, the automatic target speed input comprises a traffic sign recognition system arranged to observe a traffic sign using a camera and determine the target input based on the observed traffic sign. Traffic signs are plentiful in most developed countries and so such a technique is a reliable way in which to determine the target speed limit.

In an example, the target speed input comprises a navigation system, said navigation system comprising a means for determining a current position of the vehicle and a means for determining a plurality of speed limits located relative to the current position of the vehicle. Similarly to the traffic sign recognition system, navigation systems are reliable and robust technologies allowing for reliable speed limit determination.

In an example, the automatic target speed input comprises an environment monitoring system comprising a three dimensional mapping tool for mapping a three dimensional environment surrounding the vehicle, the environment monitoring system arranged to recognise an object in the mapped environment and associate a target speed with the recognised object.

By objects we mean various obstacles which a vehicle may encounter, such as a gradient, a road surface type, a turn in the road, and any upcoming obstacles such as rocks. Taking in account such objects provides a more reliable system.

There is also provided an example of a vehicle comprising the aforementioned speed control system.

There is also provided an example of a method of providing driver feedback in a vehicle. The method may comprise receiving a target speed demand, from a target speed input, and a current speed sensed from a speed sensor. The method may comprise generating haptic feedback in response to the current speed exceeding the target speed. The method may comprise applying the haptic feedback to an accelerator pedal of the vehicle. This method is not part of the claimed invention.

Without limitation, the current speed may be a current vehicle speed.

### BRIEF DESCRIPTION OF THE DRAWINGS

One or more embodiments of the invention will now be described, by way of example only, with reference to the accompanying drawings, in which:
Figure 1 shows a perspective view of a vehicle including a speed control system according to an embodiment of the present invention;
Figure 2 shows a side view of an accelerator pedal from the vehicle of Figure 1;
Figure 3 shows a block diagram of a speed control system of Figure 1;
Figure 4 shows a flow chart of the speed control system of Figure 3 in operation to provide feedback to a driver;
Figure 5 shows a flow chart of an output from the speed control system of Figure 3.
Figure 6 shows a block diagram of an alternative speed control system of Figure 1;
Figure 7 shows a flow diagram of the speed control system of Figure 6 in operation; and
Figure 8 shows a flow diagram of an output from the speed control system of Figure 6.

### DETAILED DESCRIPTION

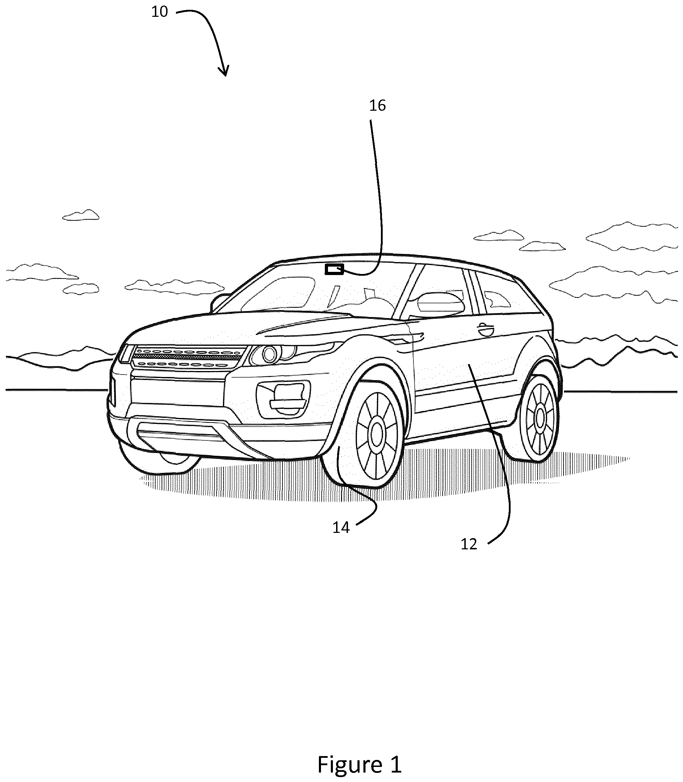

With reference to Figure 1, a vehicle 10 includes a body 12 and a set of wheels 14 for driving the vehicle 10. The vehicle also includes a stereoscopic camera 16, the reasons for which will be described below.

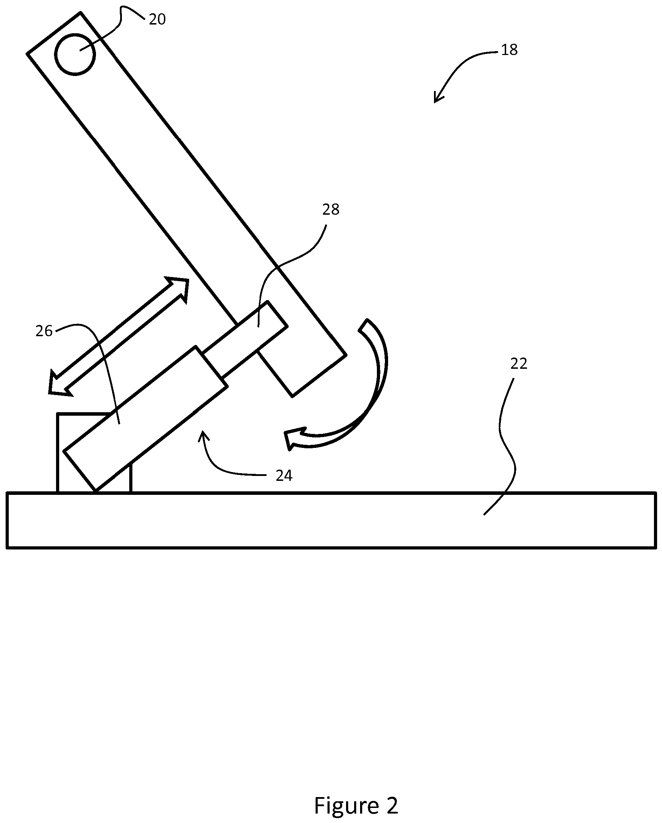

With reference to Figure 2, the vehicle also includes an accelerator pedal 18. The accelerator pedal 18 is pivotably mounted by a pivot 20 at an upper end so as to be inclined from a foot well 22. A mechanism in the form of an actuator 24, or a motor, is provided, which actuator is connected at a cylinder end 26 to the foot well 22 and at a piston end 28 to a lower end of the pedal 18. The actuator 24 is extendable and retractable longitudinally to apply a resistive force to the pedal 18 and to determine the pedal position, respectively. In-use the accelerator pedal 18 position is arranged to configure the engine to output an engine torque for ultimately controlling the speed of the wheels 14 (Figure 1).

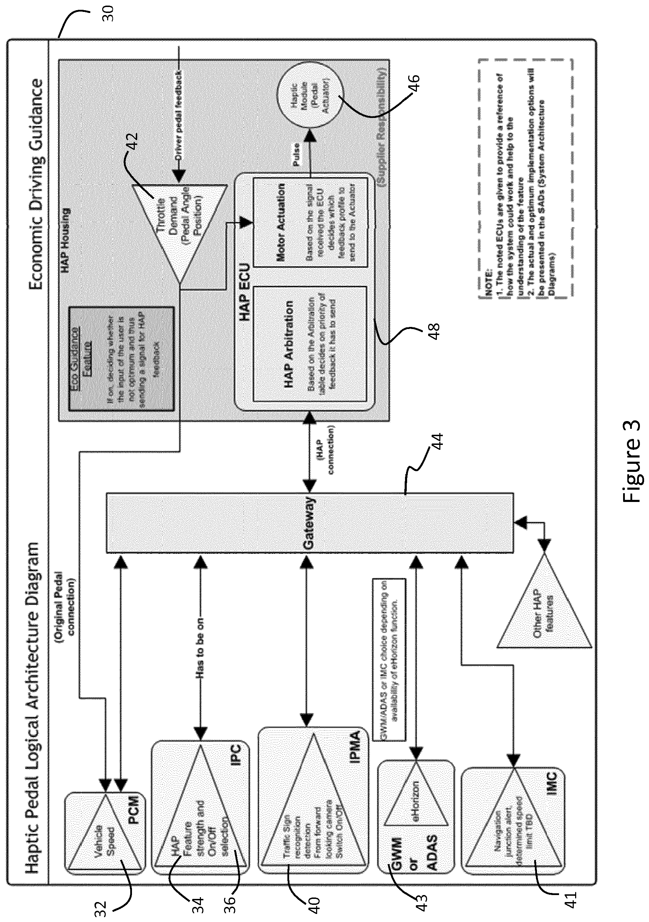

With reference to Figure 3, the vehicle also includes a speed control system 30. The speed control system 30 includes a speed sensor 32, an activator in the form of an automatic activator 34 and a manual activator 36, inputs for receiving a future speed limit demand, which inputs include a manual future speed limit input 38 and an automatic speed input, an accelerator pedal input 42, a control module 44, and an output 46. The control module 44 and the output 46 form the basis of a controller of the speed control system 30.

The speed sensor 32 is a tachometer arranged to determine the speed of the vehicle by the rotational speed of the wheels 14 (Figure 1). The speed sensor 32 is linked to the control module 44 to act as an input for monitoring a current vehicle speed.

The automatic activator 34 is a vehicle system arranged to allow or reject the use of the speed control system 30 depending on other factors such as other types of haptic feedback (described later) which may be implemented by other systems of the vehicle.

The manual activator 36 is a switch for allowing a driver to manually activate or de-active the controller. The manual activator 36 can take various forms, such as a dashboard mounted electromechanical switch or as an input to a human machine interface in the form of a touch screen. Both activators are linked to the control module 44 for selectively activating and deactivating the controller.

The manual future speed limit input 38 and the automatic future speed limit input are again linked to the control module 44 to act as inputs for inputting a future speed limit for the vehicle to travel at. The manual future speed limit input 38 is again in the form of an input to a human machine interface in the form of a touch screen, which touch screen may be dashboard mounted. The future speed limit can be input from a drop down menu or entered manually using an alphanumeric soft keypad. The automatic future speed limit input may take various forms. However, the function of the input is to detect automatically the future speed limit for the vehicle such that the driver need not intervene.

The automatic future speed limit input may be in the form of a traffic sign recognition system 40, a navigation system 41, or an environment monitoring system 43.

The traffic sign recognition system 40 uses the camera 16 to observe upcoming objects, which objects include road signs. The images are processed and compared to a database of stored images, such as the shape of road signs, e.g. a triangular or a circular shape, as well as text or patterns, for instance 30, signifying 30 mph (or kmph). Upon recognising the image, a future speed limit is generated to match the speed associated with the road sign. The future speed limit is then sent to the control module 44.

The navigation system 41 includes an electronic map, or e-map, and a Global Positioning System (GPS). The e-map has information relating to road routes and associated speed limits of those road routes. In this way, the navigation system 41 can determine the current speed limit of the vehicle and also any upcoming changes in speed limits according to the proximity of the vehicle on the e-map. For instance a current speed of the vehicle of 60 mph and an upcoming speed of 30 mph will result in the future speed limit being registered as 30 mph. The upcoming speed limit will be input to the control module 44 as a 'future speed limit'. The distance of travel to the point of change of speed limit will also be sent as part of the future speed limit signal.

The environment monitoring system 43 optionally works by using a radar in place of the camera 16. A radar signal is sent to scan the environment surrounding the vehicle. A three dimensional map of the surrounding environment is created based on reflections from the radar signal. The environment monitoring system 43 also has a database of objects, such as road gradient changes, road bends, upcoming round-a-bouts, etc. Any objects detected in the environment are associated with a manoeuvring speed. In this case, the manoeuvring speed is the future speed limit. The distance to the future speed limit is also detected by the system. Both the future speed limit and the distance thereto are sent to the control module 44. For instance, an upcoming roundabout may be associated with a speed limit of 25mph whereas the current speed of the vehicle is 50 mph and the distance to the round-a-bout may be 0.1 miles. Accordingly, the future speed limit of 25 mph is sent to the control module 44 along with the distance of 0.1 miles within which to retard the vehicle to achieve the future speed limit.

The accelerator pedal input 42 is arranged to monitor the position of the actuator 24 and also the force applied to the actuator in pressing the pedal. This input 42 is sent to the control module 44 in addition to a control module (not shown) for configuring an engine control system (ECS) for controlling an engine torque.

The control module 44 is arranged to monitor the future speed limit and compare it to the current speed of the vehicle. In the event that the current speed of the vehicle exceeds the future speed limit, i.e. a deceleration will be required, the control module 44 generates a haptic feedback signal. The haptic feedback signal is in the form of a pulsed pattern which has a frequency and/or magnitude to signify the rate of required deceleration. This rate of deceleration takes into account the distance to which the change in speed limit occurs together with the degree of engine braking available according to a current configuration of the gear box. For instance, a vehicle needing to decelerate from 60 mph to 50 mph but travelling in the highest gear and the change in speed limit only taking place in 0.5 miles will be associated with a low frequency pulse. Whereas a change in speed limit from 60 mph to 30 mph taking place in 0.1 miles will be associated with a higher frequency pulse. A frequency in the range of between 4Hz and 10Hz is considered to be appropriate, since any higher and the pulse may be perceived as vibration.

The control module 44 sends the haptic feedback signal to the actuator 24 (Figure 2) via the output 46. In turn, the actuator 24 extends and retracts according to the pulse pattern of the feedback signal.

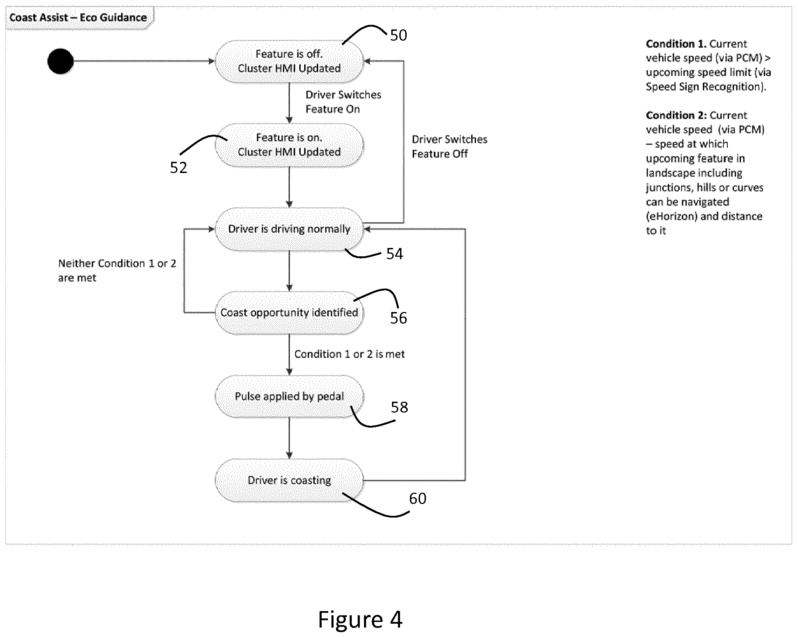

Figure 4 shows this operation in the form of a flow chart. With reference to both Figure 3 and Figure 4, initially, at step 50, the control module 44 is off. The control module 44 is activated manually using the manual activator 36. This is shown at step 52. Step 54 shows the driver driving in a normal manual fashion using the accelerator pedal 18 (Figure 2) to control the engine torque and ultimately the wheel speed. The control module 44 continues to monitor the future speed limit and compare it to the current speed of the vehicle. When the control module 44 determines that engine braking will be sufficient to retard the vehicle for an upcoming future change in speed limit, the control module 44 will determine a coast opportunity as per step 56. Where there is no change in future speed limit, the process will loop back to step 52. When the coast, or engine braking, opportunity has been identified, the feedback signal in the form of a pulsed pattern is generated by the control module 44 and sent to the actuator 24 (Figure 2) via the output 46. The feedback signal is applied to the actuator 24, and in turn the pedal 18, at step 58. The driver may choose to acknowledge the opportunity as signified at step 60. However, if the driver decides to ignore the haptic feedback, the pulse pattern will be repeated at increasing degrees of frequency and/or magnitude as the available coasting, or engine braking distance, reduces.

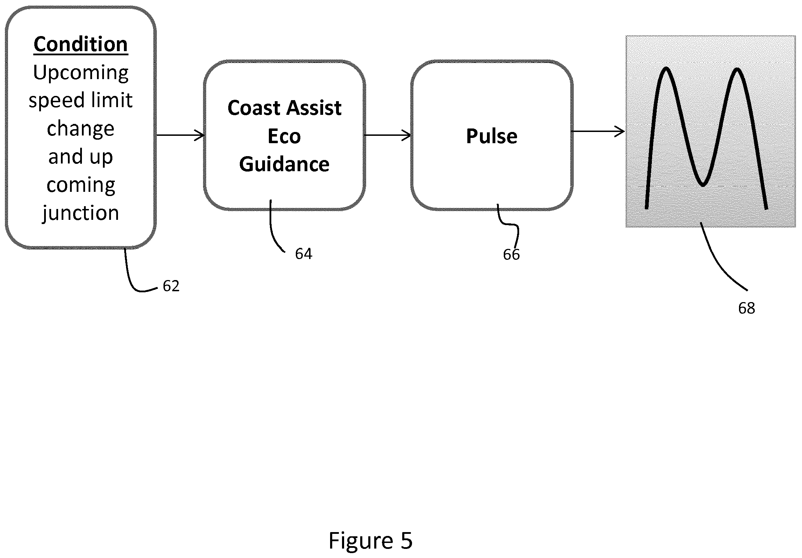

The feedback signal output is shown in the form of a flow chart in Figure 5. The identification of a future speed limit is shown at step 62. The determination of a coast opportunity is determined at step 64 and the pulsed feedback signal is generated at step 66. The actual pulsed signal is shown graphically at step 68.

By identifying such coast, or engine braking, opportunities to the driver, there can be significant fuel savings.

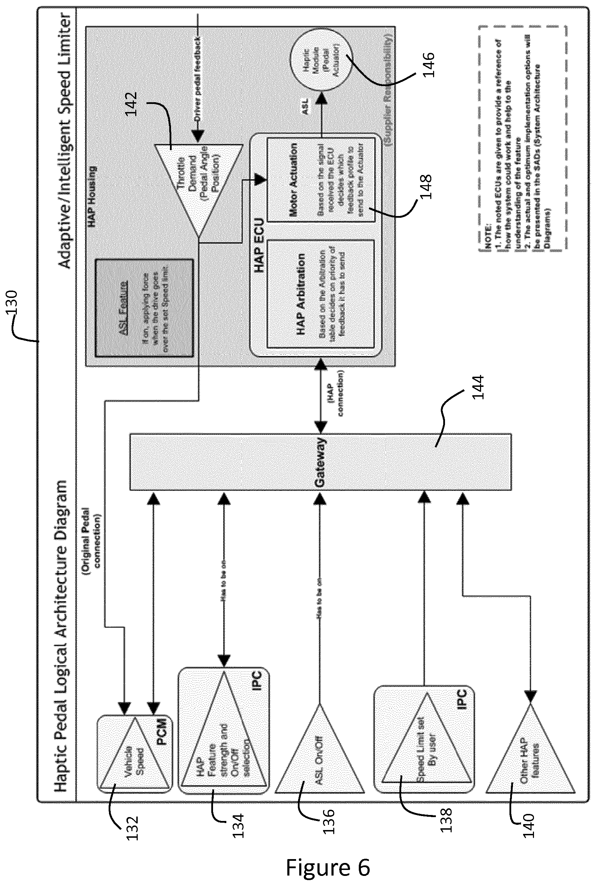

With reference to Figure 6, the vehicle also includes a speed control system 130. The speed control system 130 includes a speed sensor 132, an activator in the form of an automatic activator 134 and a manual activator 136, inputs for receiving a target speed demand, which inputs include a manual target speed input 138 and an automatic speed input 140, an accelerator pedal input 142, a control module 144, and an output 146. The control module 144 and the output 146 form the basis of a controller of the speed control system 130.

The speed sensor 132 is a tachometer arranged to determine the speed of the vehicle by the rotational speed of the wheels 14 (Figure 1). The speed sensor 132 is linked to the control module 144 to act as an input for monitoring a current vehicle speed.

The automatic activator 134 is a vehicle system arranged to allow or reject the use of the speed control system 130 depending on other factors such as other types of haptic feedback (described later) which may be implemented by other systems of the vehicle.

The manual activator 136 is a switch for allowing a driver to manually activate or de-active the controller. The manual activator 136 can take various forms, such as a dashboard mounted electromechanical switch or as an input to a human machine interface in the form of a touch screen. Both activators are linked to the control module 144 for selectively activating and deactivating the controller.

The manual target speed input 138 and the automatic target speed input 140 are again linked to the control module 144 to act as inputs for inputting a target speed for the vehicle to travel at. The manual target speed input 138 is again in the form of an input to a human machine interface in the form of a touch screen, which touch screen may be dashboard mounted. The target speed can be input from a drop down menu or entered manually using an alphanumeric soft keypad. The automatic target speed input 140 may take various forms. However the function of the input 140 is to detect automatically the target speed for the vehicle such that the driver need not intervene.

The automatic target speed input 140 may be in the form of a traffic sign recognition system, a navigation system, or an environment monitoring system.

The traffic sign recognition works using the camera 16 to observe upcoming objects, including road signs. The images are processed and compared to a database of stored images, such as the shape of road signs, e.g. a triangular or a circular shape, as well as text or patterns, for instance 130, signifying 30 mph (or kph). Upon recognising the image, a target speed is generated to match the speed associated with the road sign. The target speed then sent to the control module 144.

The navigation system includes an electronic map, or e-map, and a Global Positioning System (GPS). The e-map has information relating to road routes and associated speed limits of those road routes. In this way, the navigation system can determine the current speed limit of the vehicle and also any upcoming changes in speed limits according to the proximity of the vehicle on the e-map. For instance a current speed of 60 mph will result in the target speed being registered as 60 mph. The upcoming speed limit will be input to the control module as a 'target speed limit'. The distance of travel to the point of change of speed limit will also be sent as part of the target speed limit signal.

The environment monitoring system works by using a radar in place of the camera 16. A radar signal is sent to scan the environment surrounding the vehicle. A three dimensional map of the surrounding environment is created based on reflections from the radar signal. The environment monitoring system also has a database of objects, such as road gradient changes, road bends, upcoming round-a-bouts, etc. Any objects detected in the environment are associated with a manoeuvring speed. In this case, the manoeuvring speed is the target speed. The distance to the target speed is also detected by the system. Both the target speed and the distance thereto are sent to the control module 144. For instance, an upcoming roundabout may be associated with a speed limit of 25mph. Accordingly, the target speed of 25 mph is sent to the control module.

The accelerator pedal input 142 is arranged to monitor the position of the actuator 24 and also the force applied to the actuator in pressing the pedal. This input 142 is sent to the control module 144 in addition to a control module (not shown) for configuring an engine control system (ECS) for controlling an engine torque.

The control module 144 is arranged to monitor the current speed of the vehicle and the target speed. When the current speed exceeds the target speed, the control module 144 recognises that any further acceleration demand input to the accelerator pedal will cause the current speed to exceed further the target speed. For instance, a current vehicle speed of 30mph, exceeds a target speed of 20mph, as read from a road sign for instance. The control module 144 will generate a resistance force 148 to be applied to the accelerator pedal 18 for preventing further depression of the pedal 18. The force may be applied at a particular point of travel of the pedal 18 to allow movement up to a position associated with the target speed but resist any additional movement. A user may in fact use the resisted pedal as a footrest since the force is sufficient to act as such.

In particular a force arranged to apply a moment to the accelerator pedal of between 8 and 14Nm will suffice for the pedal to act as a footrest. More specifically, a moment of 11 Nm would be most likely.

However, in the event of a sudden need for an injection of acceleration, the resistance force may be overcome by a larger opposing force exerted on the pedal by the driver. In such an event, the control module 144 reconfigures the actuator 24 so as to apply a lower magnitude force to allow the driver to manually drive the vehicle in the time of need. Such a case may arise where acceleration is required to avoid a potential collision such as in the event of overtaking a slow moving vehicle on a single carriageway.

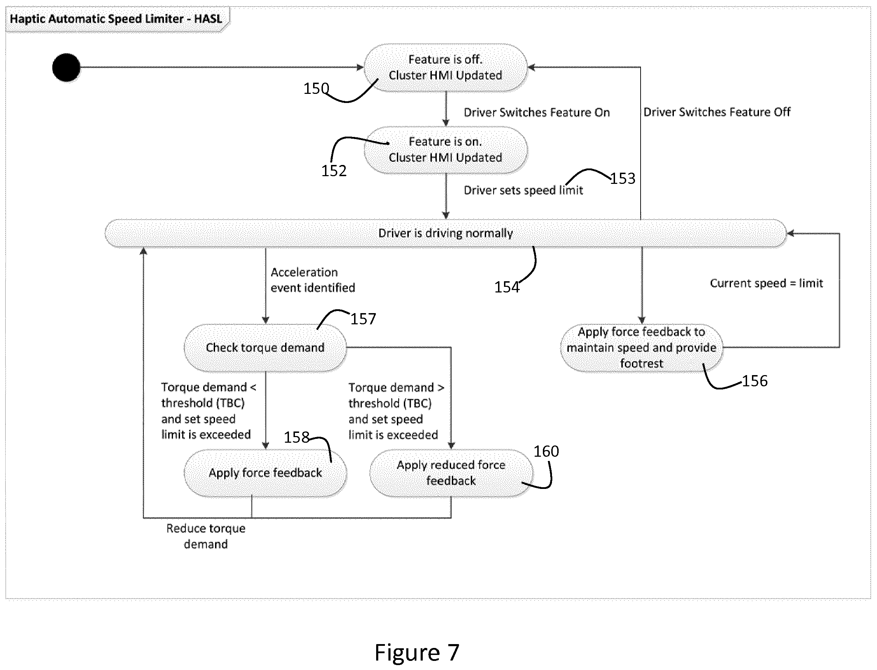

Figure 7 shows this functionality of the control module 144 in the form of a flow chart. With reference to both Figures 6 and 7, initially the control module 144 is off as shown at step 150. The control module 144 is then activated, or turned on, at step 152 by the automatic or manual activators. The control module 144 will send an update to the dashboard mounted human machine interface to advise that the feature, or control module 144, is on. At step 153, the driver manually sets the target speed using the manual activator 136 (Figure 6). Of course, step 153 is applicable to the alternative case whereby the automatic activator 134 automatically detects the target speed. Step 154 represents the driver driving in a normal manual way using the accelerator pedal to control the engine torque and ultimately the speed of the vehicle, subject to gear box setting.

When the target speed is less than or equal to the current speed, the control module will generate a resistive force to be sent via the output to the actuator to apply the resistive force to the pedal, as shown at step 156. In this way, the pedal 18 (Figure 2) may be used as a footrest until the feature is deactivated.

The pedal position, or torque demand, is constantly monitored as per step 157. At step 158, when the target speed is exceeded, the pedal 18 will remain resistive even if a driver applies a force to the accelerator pedal which is lower than the resistive force already being applied. However, as per step 160, when the driver applies an opposing force greater than the resistive force, the control module modifies the resistance force to a lesser amount to allow the driver to manually accelerate in times of need.

In an example, even though the driver has applied an opposing force to the accelerator pedal 18 greater than the resistive force, such that the resistive force is reduced to a lesser amount to allow the driver to manually accelerate, the target speed remains unaffected.

In some examples, the accelerator pedal is biased to return to the position associated with the target speed. Therefore, when the driver reduces or removes the opposing force applied to the accelerator pedal 18, the accelerator pedal travels towards the position associated with the target speed. In some examples, the resistive force is arranged to subsequently increase to its original value, that is, to the value that was present before the accelerator pedal 18 was depressed past a position associated with the target speed. The driver is then aware of the target speed from the position of the accelerator pedal 18. The accelerator pedal 18 can again act as a footrest, since the resistive force is reinstated.

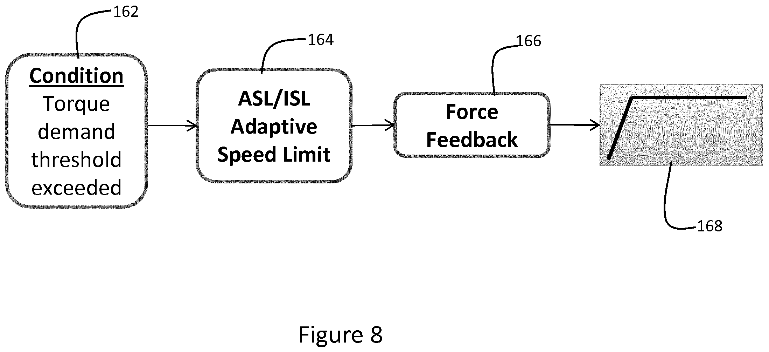

With reference to Figure 8, the output is shown in the form of a flow diagram. In particular, step 162 shows the fact that the torque demand, or pedal position, is greater than required for the target speed. The speed limit at step 164 is thus limited by applying the force at step 166 to the pedal, which force is shown graphically as a step change in resistance force at step 168.

## Claims

1. A controller for a vehicle (10), the controller comprising;
an input for receiving a sensed current vehicle speed, and a future speed limit; a control module (44) arranged to generate a haptic feedback signal based on the current speed being greater than the future speed limit, wherein the haptic feedback signal comprises a pulsed pattern and the pulsed pattern is set at a pulse frequency or magnitude depending on a retardation rate, wherein the retardation rate is based on a distance to the future speed limit together with a degree of engine braking available according to a current configuration of a gear box of the vehicle (10); and
an output (46) for outputting the haptic feedback signal to a mechanism for providing haptic feedback to a driver of the vehicle (10).

2. The controller of claim 1, wherein the future speed limit is associated with distance relative to the vehicle (10) and wherein the control module (44) is arranged to generate the haptic feedback signal based on a distance of the vehicle (10) to a position of the future speed limit exceeding an engine braking distance.

3. The controller of claim 1 or claim 2, wherein the mechanism is coupled to an accelerator pedal (18) for applying the haptic feedback thereto.

4. A speed control system (30) for a vehicle (10), the system (30) comprising; an accelerator pedal (18); a vehicle speed sensor (32); a future speed limit detector; and the controller of any preceding claim.

5. The speed control system (30) of claim 4, wherein the future speed limit detector is an automatic speed limit detector.

6. The speed control system (30) of claim 5, wherein the automatic speed limit detector comprises a traffic sign detection system (40) having a camera (16) for observing a traffic sign, and wherein the detection system is arranged to determine the future speed limit based on information from the observed traffic sign.

7. The speed control system (30) of claim 6, wherein the camera (16) is stereoscopic to detect a distance of the traffic sign from the vehicle (10).

8. The speed control system (30) of any of claims 4 to 7, wherein the future speed limit detector comprises a navigation system (41), said navigation system (41) comprising a means for determining a current position of the vehicle (10) and a means for determining a plurality of speed limits located relative to the current position of the vehicle (10).

9. The speed control system (30) of any of claims 4 to 8, wherein the future speed limit detector comprises an environment monitoring system (43) comprising a three dimensional mapping tool for mapping a three dimensional environment surrounding the vehicle (10), the environment monitoring system (43) arranged to recognise an object in the mapped environment and associate a future speed limit with the recognised object.

10. A vehicle (10) comprising the speed control system (30) of any of claims 4 to 9.

11. A method of providing feedback to a driver of a vehicle (10), the method comprising;
receiving a sensed current vehicle speed, and a future speed limit; generating a haptic feedback signal based on the current vehicle speed being greater than the future speed limit, wherein the haptic feedback signal comprises a pulsed pattern and the pulsed pattern is set at a pulse frequency or magnitude depending on a retardation rate, wherein the retardation rate is based on a distance to the future speed limit together with a degree of engine braking available according to a current configuration of a gear box of the vehicle (10); and
providing haptic feedback to a driver of the vehicle (10) based on the haptic feedback signal.

## Patentansprüche

1. Steuerung für ein Fahrzeug (10), die Steuerung umfassend;
einen Eingang zum Empfangen einer erfassten aktuellen Fahrzeuggeschwindigkeit und einer zukünftigen Geschwindigkeitsbegrenzung;
ein Steuermodul (44), das eingerichtet ist, um ein Signal der haptischen Rückmeldung basierend auf der aktuellen Geschwindigkeit zu erzeugen, die größer als die zukünftige Geschwindigkeitsbegrenzung ist, wobei das Signal der haptischen Rückmeldung ein gepulstes Muster umfasst und das gepulste Muster in Abhängigkeit von einer Verzögerungsrate auf eine Impulsfrequenz oder -größe eingestellt wird, wobei die Verzögerungsrate auf einem Abstand zu der zukünftigen Geschwindigkeitsbegrenzung zusammen mit einem Grad der Motorbremsung basiert, der gemäß einer aktuellen Konfiguration eines Getriebes des Fahrzeugs (10) verfügbar ist; und
einen Ausgang (46) zum Ausgeben des Signals der haptischen Rückmeldung an einen Mechanismus zum Bereitstellen einer haptischen Rückmeldung an einen Fahrer des Fahrzeugs (10).

2. Steuerung nach Anspruch 1, wobei die zukünftige Geschwindigkeitsbegrenzung dem Abstand relativ zu dem Fahrzeug (10) zugeordnet ist und wobei das Steuermodul (44) eingerichtet ist, um das Signal der haptischen Rückmeldung basierend auf einem Abstand des Fahrzeugs (10) zu einer Position der zukünftigen Geschwindigkeitsbegrenzung zu erzeugen, die einen Motorbremsabstand überschreitet.

3. Steuerung nach Anspruch 1 oder 2, wobei der Mechanismus zum Anwenden der haptischen Rückmeldung darauf mit einem Fahrpedal (18) gekoppelt ist.

4. Geschwindigkeitssteuersystem (30) für ein Fahrzeug (10), das System (30) umfassend; ein Fahrpedal (18); einen Fahrzeuggeschwindigkeitssensor (32); einen Detektor für die zukünftige Geschwindigkeitsbegrenzung; und die Steuerung nach einem der vorstehenden Ansprüche.

5. Geschwindigkeitssteuersystem (30) nach Anspruch 4, wobei der Detektor für die zukünftige Geschwindigkeitsbegrenzung ein Detektor für die automatische Geschwindigkeitsbegrenzung ist.

6. Geschwindigkeitssteuersystem (30) nach Anspruch 5, wobei der Detektor für die automatische Geschwindigkeitsbegrenzung ein Verkehrszeichenerfassungssystem (40), das eine Kamera (16) aufweist, zum Beobachten eines Verkehrszeichens ist, und wobei das Erfassungssystem eingerichtet ist, um die zukünftige Geschwindigkeitsbegrenzung basierend auf Informationen von dem beobachteten Verkehrszeichen zu bestimmen.

7. Geschwindigkeitssteuersystem (30) nach Anspruch 6, wobei die Kamera (16) stereoskopisch ist, um einen Abstand des Verkehrszeichens von dem Fahrzeug (10) zu erfassen.

8. Geschwindigkeitssteuersystem (30) nach einem der Ansprüche 4 bis 7, wobei der Detektor für die zukünftige Geschwindigkeitsbegrenzung ein Navigationssystem (41) umfasst, das Navigationssystem (41) umfassend ein Mittel zum Bestimmen einer aktuellen Position des Fahrzeugs (10) und ein Mittel zum Bestimmen einer Vielzahl von Geschwindigkeitsbegrenzungen, die sich relativ zu der aktuellen Position des Fahrzeugs (10) befinden.

9. Geschwindigkeitssteuersystem (30) nach einem der Ansprüche 4 bis 8, wobei der Detektor für die zukünftige Geschwindigkeitsbegrenzung ein Umgebungsüberwachungssystem (43) umfasst, umfassend ein dreidimensionales Abbildungswerkzeug zum Abbilden einer das Fahrzeug (10) umgebenden dreidimensionalen Umgebung, wobei das Umgebungsüberwachungssystem (43) so eingerichtet ist, dass es ein Objekt in der abgebildeten Umgebung erkennt und eine zukünftige Geschwindigkeitsbegrenzung dem erkannten Objekt zuordnet.

10. Fahrzeug (10), umfassend das Geschwindigkeitssteuersystem (30) nach einem der Ansprüche 4 bis 9.

11. Verfahren zum Bereitstellen einer Rückmeldung an einen Fahrer eines Fahrzeugs (10), das Verfahren umfassend;
Empfangen einer erfassten aktuellen Fahrzeuggeschwindigkeit und einer zukünftigen Geschwindigkeitsbegrenzung;
Erzeugen eines Signals der haptischen Rückmeldung basierend auf der aktuellen Fahrzeuggeschwindigkeit, die größer als die zukünftige Geschwindigkeitsbegrenzung ist, wobei das Signal der haptischen Rückmeldung ein gepulstes Muster umfasst und das gepulste Muster in Abhängigkeit von einer Verzögerungsrate auf eine Impulsfrequenz oder -größe eingestellt wird, wobei die Verzögerungsrate auf einem Abstand zu der zukünftigen Geschwindigkeitsbegrenzung zusammen mit einem Grad der Motorbremsung basiert, der gemäß einer aktuellen Konfiguration eines Getriebes des Fahrzeugs (10) verfügbar ist; und
Bereitstellen einer haptischen Rückmeldung an einen Fahrer des Fahrzeugs (10) basierend auf dem Signal der haptischen Rückmeldung.

## Revendications

1. Dispositif de commande destiné à un véhicule (10), le dispositif de commande comprenant :
une entrée permettant de recevoir une vitesse actuelle captée de véhicule, et une future limitation de vitesse ; un module de commande (44) agencé pour générer un signal de retour haptique en fonction de la vitesse actuelle étant supérieure à la future limitation de vitesse, le signal de retour haptique comprenant un motif pulsé et le motif pulsé étant réglé à une fréquence ou amplitude d'impulsion dépendant d'un taux de retard, le taux de retard étant en fonction d'une distance jusqu'à la future limitation de vitesse conjointement avec un degré de freinage moteur disponible selon une configuration actuelle d'une boîte de vitesses du véhicule (10) ; et
une sortie (46) permettant de délivrer en sortie le signal de retour haptique à un mécanisme permettant de fournir un retour haptique à un conducteur du véhicule (10).

2. Dispositif de commande selon la revendication 1, dans lequel la future limitation de vitesse est associée à une distance par rapport au véhicule (10) et dans lequel le module de commande (44) est agencé pour générer le signal de retour haptique en fonction d'une distance du véhicule (10) jusqu'à une position de la future limitation de vitesse dépassant une distance de freinage moteur.

3. Dispositif de commande selon la revendication 1 ou la revendication 2, dans lequel le mécanisme est accouplé à une pédale d'accélérateur (18) pour y appliquer le retour haptique.

4. Système de commande de vitesse (30) destiné à un véhicule (10), le système (30) comprenant ; une pédale d'accélérateur (18) ; un capteur de vitesse de véhicule (32) ; un détecteur de future limitation de vitesse ; et le dispositif de commande selon l'une quelconque revendication précédente.

5. Système de commande de vitesse (30) selon la revendication 4, dans lequel le détecteur de future limitation de vitesse est un détecteur automatique de limitation de vitesse.

6. Système de commande de vitesse (30) selon la revendication 5, dans lequel le détecteur automatique de limitation de vitesse comprend un système de détection de panneaux de signalisation (40) ayant une caméra (16) permettant d'observer un panneau de signalisation, et dans lequel le système de détection est agencé pour déterminer la future limitation de vitesse en fonction d'informations provenant du panneau de signalisation observé.

7. Système de commande de vitesse (30) selon la revendication 6, dans lequel la caméra (16) est stéréoscopique pour détecter une distance du panneau de signalisation par rapport au véhicule (10).

8. Système de commande de vitesse (30) selon l'une quelconque des revendications 4 à 7, dans lequel le détecteur de future limitation de vitesse comprend un système de navigation (41), ledit système de navigation (41) comprenant un moyen permettant de déterminer une position actuelle du véhicule (10) et un moyen permettant de déterminer une pluralité de limitations de vitesse localisées par rapport à la position actuelle du véhicule (10).

9. Système de commande de vitesse (30) selon l'une quelconque des revendications 4 à 8, dans lequel le détecteur de future limitation de vitesse comprend un système de surveillance d'environnement (43) comprenant un outil de cartographie tridimensionnelle permettant de cartographier un environnement tridimensionnel entourant le véhicule (10), le système de surveillance d'environnement (43) étant agencé pour reconnaître un objet dans l'environnement cartographié et associer une future limitation de vitesse à l'objet reconnu.

10. Véhicule (10) comprenant le système de commande de vitesse (30) selon l'une quelconque des revendications 4 à 9.

11. Procédé de fourniture d'un retour à un conducteur d'un véhicule (10), le procédé comprenant ;
la réception d'une vitesse actuelle captée de véhicule, et d'une future limitation de vitesse ;
la génération d'un signal de retour haptique en fonction de la vitesse actuelle de véhicule étant supérieure à la future limitation de vitesse, le signal de retour haptique comprenant un motif pulsé et le motif pulsé étant réglé à une fréquence ou amplitude d'impulsion dépendant d'un taux de retard, le taux de retard étant en fonction d'une distance jusqu'à la future limitation de vitesse conjointement avec un degré de freinage moteur disponible selon une configuration actuelle d'une boîte de vitesses du véhicule (10) ; et
la fourniture d'un retour haptique à un conducteur du véhicule (10) en fonction du signal de retour haptique.
